# EUROPEAN PATENT APPLICATION

(11) **EP 3 093 374 A1**
(43) Date of publication of application: **16.11.2016**
(21) Application number: 15167430.6
(22) Date of filing: 12.05.2015
(51) Int. Cl.: C25B 1/12, C25B 9/20, C25B 11/03

(54) **ELECTROLYZER APPARATUS**

(71) Applicant: Exen Sarl, 1196 Gland (CH)
(72) Inventor: Burkhalter, Ernest, 1196 Gland (CH)
(74) Representative: reuteler & cie SA

(57) **Abstract**

Electrolyzer apparatus (5) comprising a plurality of electrode units (10) mounted in a juxtaposed stacked manner along a longitudinal axis (A) to form an electrode stack (6), the electrode units (10) of the stack being separated by a membrane (20) configured for the transfer of ions between electrode units. Each electrode unit comprises a liquid inlet (16) configured for inflow of an alkaline electrolyte, and gas outlets (18) for gas produced by an electrochemical reaction on the electrolytic liquid, the electrode units comprising a bipolar plate (12) supported by an annular portion (14).

## Description

The present invention relates to an electrolyzer to split water into hydrogen and oxygen.

Electrolyzers may advantageously be used in conjunction with renewable energy sources such as wind energy and solar energy as a means of storing excess energy. The production of hydrogen and oxygen by electrolysis enables the transformation of electrical energy into hydrogen but can be used in many applications for instance to enrich natural gas supplies, to produce energy by means of a hydrogen cell battery, or for the production of various chemicals such as fertilizers and for other uses in industry.

Known electrolyzers may either be based on a proton exchange membrane, or may be based on alkaline electrolysis that can either function at atmospheric pressure or at high pressure depending on the technology. Proton exchange membrane electrolyzers are costly and generally limited in size.

Alkaline electrolyzers are well-known and widely used. Electrolyzers that function at atmospheric pressure are somewhat limited in their capacity to react to large variations in power supply and also require a compression station to store the produced gases. The compression station reduces the efficiency of the system. Alkaline electrolyzers functioning at high pressure, which may typically be up to 32 bars at the exit of the electrolyzer, are thus able to produce hydrogen and oxygen without requiring a compression station. A further advantage of such electrolyzers is that they are able to function at high temperatures that positively influence the electrolysis efficiency and yield. The pressure of 32 bars represents an optimal pressure for the yield of the reaction whereby operating at pressures significantly above or below this value does not bring any advantages for the electrochemical reaction efficiency or yield. Another advantage of high pressure alkaline electrolyzers is their ability to adapt very quickly to variations in power supply in a safe manner.

A drawback of high pressure alkaline electrolyzers however is the need to withstand the high pressure within the electrolyzer, resulting in more costly construction and the cost of maintenance in view of the need to ensure hermetic sealing between electrolysis cells. Many of the early alkaline electrolyzers comprised a membrane of asbestos with a so-called "zero gap between the electrode and the membrane". In view of safety concerns however asbestos may no longer be used as a material in the construction of such electrolyzers.

It is an object of this invention to provide a high pressure alkaline electrolyzer that is cost effective, in particular economical to produce and maintain, yet performant, and in particular having a high efficiency.

It is advantageous to provide an electrolyzer that may be easily produced in various sizes depending on the available power supply, in particular that may be easily scaled up or down to take into account the amount of power available.

It is advantageous to provide an electrolyzer that can advantageously support very quick and large variations in electrical power supply, for instance from photovoltaic or wind energy sources.

It is advantageous to provide an electrolyzer that can be used in conjunction with small power supplies that is compact and easy to install, use or maintain.

It is advantageous to provide an electrolyzer that does not require exotic or highly regulated or unsafe products, in particular for the electrolyte membrane.

Objects of the invention have been achieved by providing an electrolyzer according to claim 1.

Objects of the invention have been achieved by providing an electrolyzer according to claim 3.

Disclosed herein is an electrolyzer apparatus comprising a plurality of electrode units mounted in a juxtaposed stacked manner along a center longitudinal axis to form an electrode stack, the electrode units of the stack being separated by a membrane configured for the transfer of ions between electrode units. The electrode unit comprises a liquid inlet configured for inflow of an alkaline electrolyte, and gas outlets for gas produced by an electrochemical reaction on the electrolytic liquid, the electrode units comprising a bipolar plate supported by an annular portion.

According to a first aspect of the invention, the electrode unit comprises at least one electrode plate mounted on at least one side of the bipolar plate, the electrode plate comprising a major portion spaced from the bipolar plate, the electrode plate further comprising orifices allowing the electrolyte liquid to flow on opposite sides of the major portion such that an electrochemical reaction may occur on both sides of the electrode plate.

According to a second aspect of the invention, the electrode stack is clamped between end plates and a stack clamping mechanism comprising a center biasing element configured to apply pressure between the end plates along said center longitudinal axis of the electrode stack.

According to an embodiment, the electrode unit may advantageously comprise a first electrode plate on one side of the bipolar plate and a second electrode plate on an opposite second side of the bipolar plate.

According to an embodiment, the liquid inlet of the electrode unit comprises a bore through the annular portion and into a portion of the bipolar plate such that the inlet accesses both sides of the bipolar plate.

According to an embodiment, the electrode plate comprises a flange portion at a periphery of the electrode plate configured for fixing the electrode plate to the bipolar plate, and a radial or conical portion connecting the flange portion to the major portion configured to space the major portion at a non-zero certain distance from the surface of the bipolar plate.

According to an embodiment, the orifices may advantageously provided in the conical or radial portion of the electrode plate.

According to an embodiment, the annular portion of the electrode unit comprises a first side having a first side conical surface and a second side having a second side conical surface substantially complementary to the first side conical surface such that the conical surfaces effect a centering of the stacked electrode units one with respect to the other along the longitudinal axis of the apparatus.

According to an embodiment, an annular conical seal may advantageously be positioned between the first side conical surface and second side conical surface of adjacent stacked electrode units.

According to an embodiment, the seal may be made of a polymer material, composite material, or another dielectric material configured to ensure a hermetic seal.

According to an embodiment, the annular portion comprises a first side with a membrane clamping section having an inner radial surface portion, joined to a conical surface portion via an acute angle corner, and a second side comprising a membrane clamping section complementary to the membrane clamping section of the first side, the second side membrane clamping section comprising an outer radial surface portion and an conical surface portion connected together via an acute angle protruding corner, a membrane peripheral portion of the membrane being clamped between the membrane clamping sections of adjacent stacked electrode units.

According to an embodiment, the center biasing element advantageously comprises a spring and a pressure generating mechanism, such as a bolt and nut, for pressing the spring against a center locating portion of at least one of the end plates aligned with the center longitudinal axis.

According to an embodiment, the spring may be in the form of a stack of plurality of plate or cups springs.

Objects of the invention have been achieved by providing an electrolyzer system for gas production according to claim 15.

Also disclosed herein is an electrolyzer system for gas production, in particular for splitting water into hydrogen gas and oxygen gas, comprising: an electrolyzer as set forth above; gas storage containers comprising a container for a first gas, for instance hydrogen gas, and a container for a second gas, for instance oxygen gas; a gas circulation system interconnecting the electrolyzer to the gas storage containers; and a liquid supply and feed system for feeding an electrolyte liquid into the electrolyzer.

According to an advantageous embodiment, the electrolyzer system for gas production is configured to be connected directly to a photovoltaic or wind turbine electrical energy source. In such configuration, the electrolyzer system may be used to transform excess energy into pressurized hydrogen and oxygen gas split from water.

According to an advantageous embodiment, the electrolyzer system for gas production is configured to operate without a compressor for the production of gas at a pressure around 32 bars, for instance in a range of 20 to 40 bars.

According to an advantageous embodiment, the electrolyzer system for gas production is configured to operate with an alkaline liquid solution as the electrolyte. The alkaline liquid solution may comprise for instance potassium hydroxide (KOH) at a concentration in water of between 20% and 40%, preferably between 25% and 35%, for instance 30% +/- 2%.

According to an advantageous embodiment, the electrolyzer stack of the electrolyzer system for gas production may be configured, with respect to a predefined nominal electrical power rating, for higher, respectively lower power supply capabilities by increasing, respectively decreasing the number of stacked electrode units of a predefined electrode stack.

Further objects and advantageous features of the invention will be apparent from the claims, from the detailed description, and annexed drawings, in which:

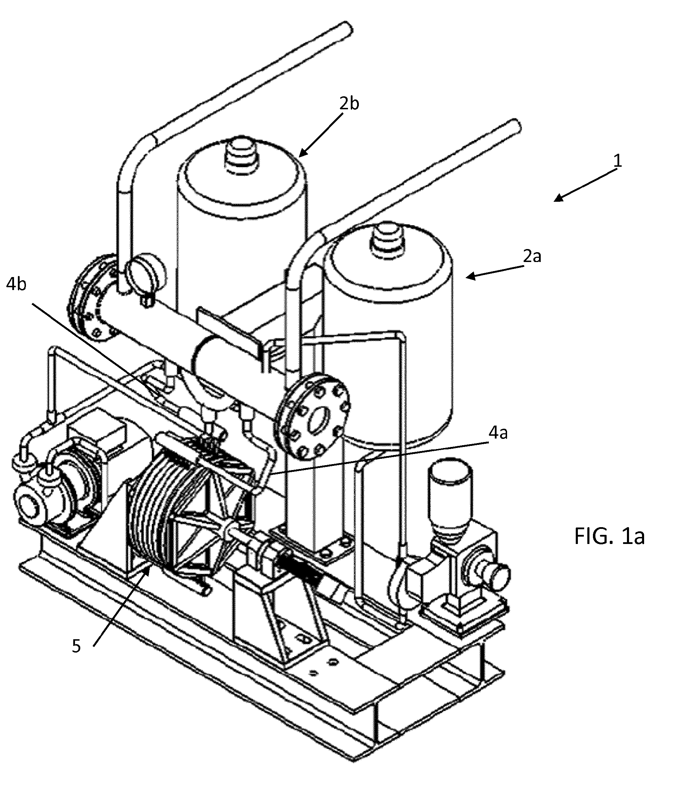

Fig. 1a is a view in perspective of an electrolyzer system according to an embodiment of this invention;

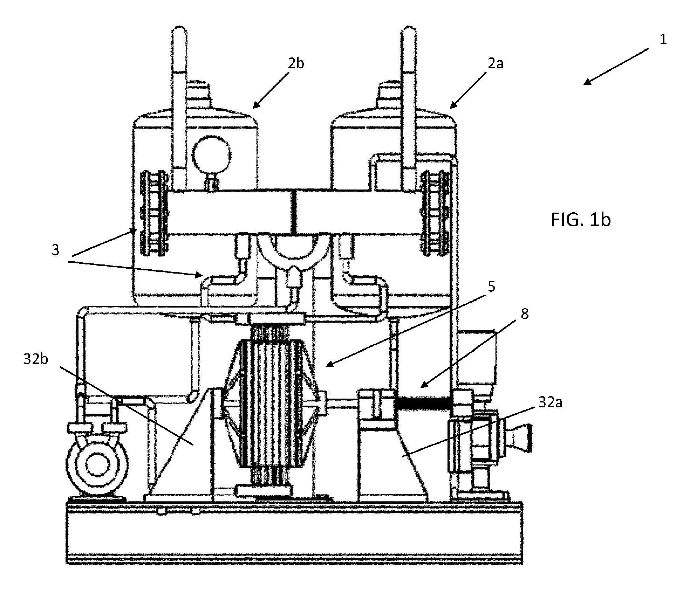

Fig. 1b is a plan view of the system of figure 1 a;

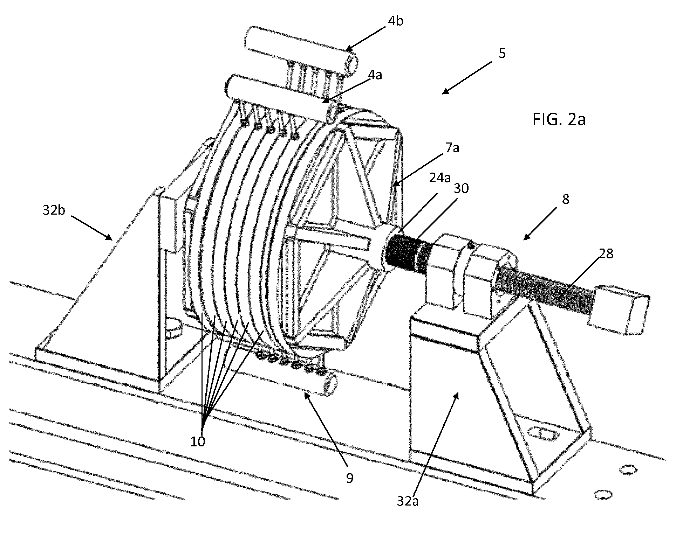

Fig. 2a is a view in perspective of an electrolyzer of the system of figures 1 a and 1 b according to an embodiment of this invention;

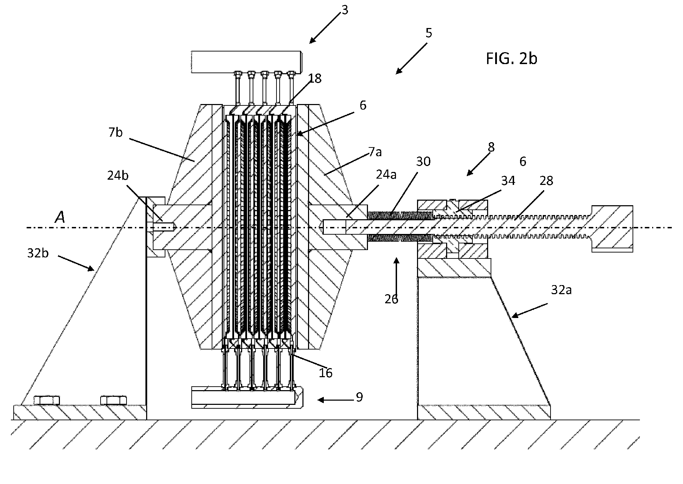

Fig. 2b is a view in longitudinal cross-section of the electrolyzer figure 2a;
Fig. 3a is a longitudinal cross-section of the main part of the electrolyzer, in particular showing the stacked electrolyzer cells;
Fig. 3b is a detailed view of a lower portion of the electrolyzer shown in figure 3a;

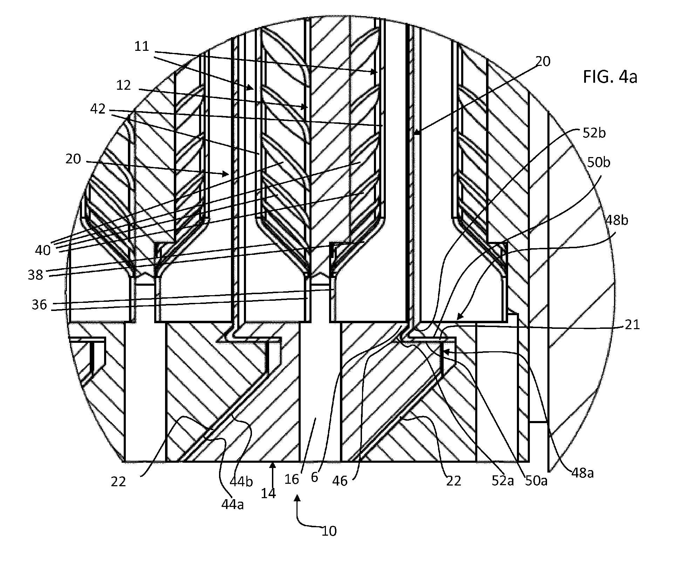

Fig. 4a is a view of an electrode according to an embodiment of this invention used the electrolyzer illustrated figure 3a;

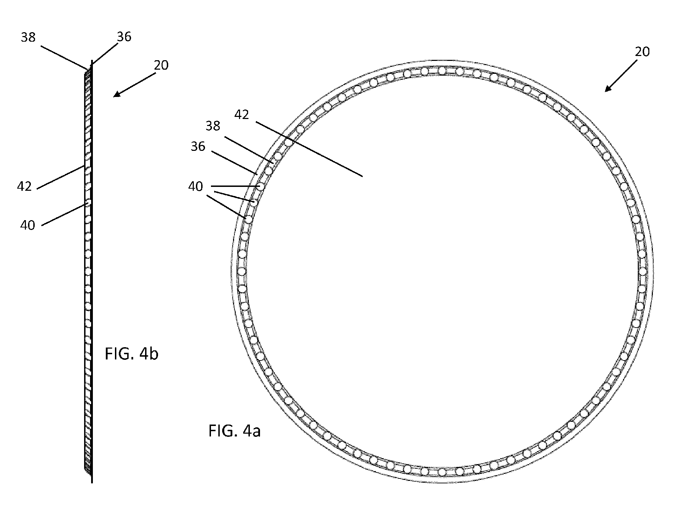

Fig. 4b is a side view of the electrode of figure 4b.

Referring to the figures, an electrolyzer system 1 for gas production, in particular for splitting water into hydrogen gas and oxygen gas is illustrated. The electrolyzer system 1 comprises an electrolyzer apparatus 5, gas storage containers 2a, 2b comprising a container for a first gas 2a, in particular hydrogen gas, and a container for a second gas 2b, in particular oxygen gas. The electrolyzer system further comprises a gas circulation system 3 interconnecting the electrolyzer apparatus 5 to the gas storage containers 2a, 2b, the gas circulation system 3 comprising conduits for a first gas 4a and conduits for a second gas 4b. The electrolyzer system also comprises a liquid supply and feed system 6 for feeding the alkaline liquid into the electrolyzer. The alkaline liquid may comprise distilled water with a potassium hydroxide KOH solution in a concentration of between 25 % and 35 % for instance 30%. Within the scope of the invention, it is possible to use other alkaline liquids, for instance a sodium hydroxide solution.

The electrolyzer apparatus 5 comprises an electrode stack 6 mounted between end plates 7a, 7b that are fixed together by a stack clamping mechanism 8. The electrode stack 6 comprises a plurality of electrode units or cells 10 that are stacked one against the other along a longitudinal axis *A*. Depending on the electrical power for which the apparatus is configured, the number of electrode units 10 in the stack may be varied. The end plates 7a, 7b are biased towards each other and clamp the electrode units 10 together. The stack clamping mechanism 8 comprises end supports 32a, 32b to take up the forces applied by a center biasing element 26 that presses the end plates 7a, 7b towards each other.

In the illustrated embodiment, the center biasing element comprises a bolt 28 that engages a nut 34 fixed to one of the supports 32a, an end 29 of the bolt 28 engaging in a center locating portion 24a of one of the end plates 7a. The other end plate 7b has a center locating portion 24b that engages the opposite end support 32b whereby the center locating portions are aligned with the longitudinal center axis A of the electrode stack 6. The center biasing element 26 may further comprise a spring 30 for instance in a form of a stack of plate or cup springs that apply a spring force in the compression of the end plates towards each other that allows for adjustment in thermal expansion and in order to keep the electrode stack clamping force within a certain elastic range. As we will describe further on, the electrode units 10 stack together in such a way that they have a centering effect with respect to each other to ensure they are accurately axially aligned and also to ensure effective sealing between the units of the stack.

Although in the described embodiment a bolt and spring mechanism is used for the center biasing element, other systems applying pressure may be used within the scope of the invention, for instance a pneumatic or hydraulic press system, a pinion and rack mechanism or other mechanisms allowing to apply pressure on the center locating portion 24a of one of the end plates 7a. Also, within the scope of the invention it is possible to have both end plates being applied pressure by spring mounted elements. The end supports 32a, 32b may also have various forms, shapes and configurations provided that the function of supporting the counter forces for the clamping of the stack is satisfied.

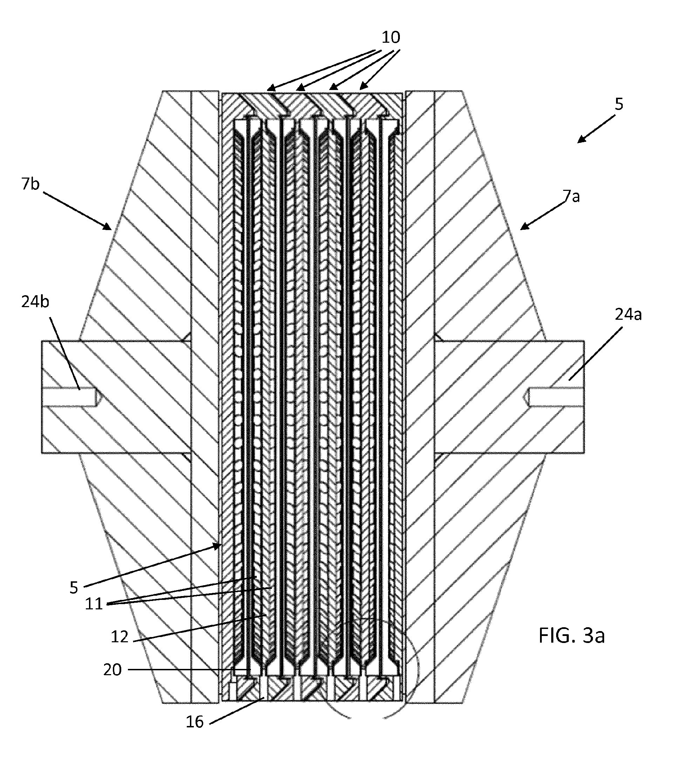

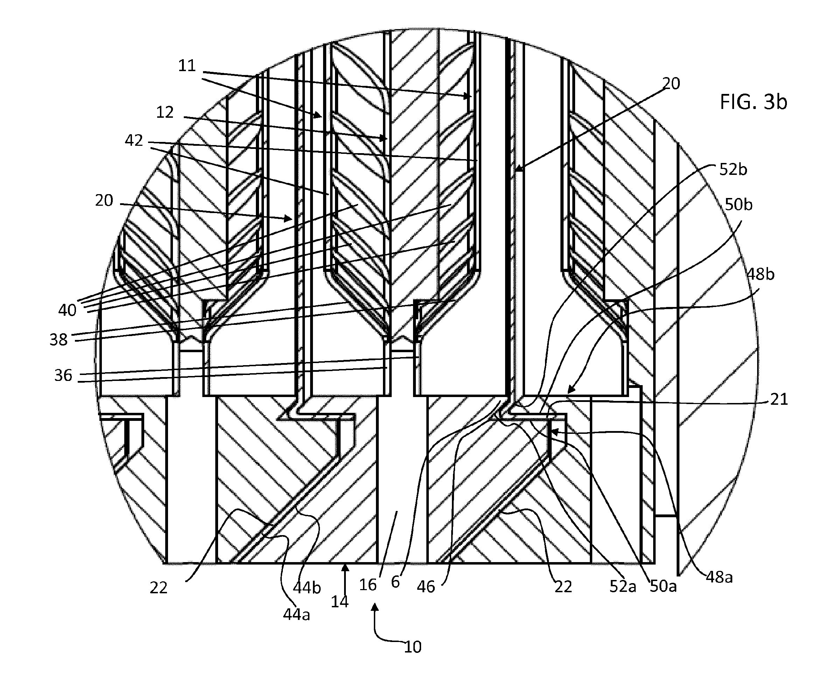

Turning now mainly to figures 3a and 3b, as mentioned the electrode stack 6 comprises a plurality of stacked electrode units 10, the number of electrode units 10 being selected as a function of the electrical power of the electrical energy supply to which the electrolyzer apparatus is connected. Each electrode unit 10 is connected to a liquid inlet 16 arranged at a lower portion of the apparatus 5, the liquid inlet 16 connected to a supply of electrolyte and configured for allowing electrolyte to flow into the electrode unit 10. Each electrode unit 10 also comprises gas outlets 18, a first gas outlet thereof 18a for collecting hydrogen gas and a second gas outlet 18b for collecting the oxygen gas resulting from the splitting of water molecules under the electrochemical reaction.

A membrane 20 is positioned between electrode units 10 and allows the passage of ions therethrough for the electrochemical process. Such membranes are *per se* known and various such known membranes may be used in the present invention. In an advantageous embodiment, the membrane is made of a material commercialized under the tradename "Zirfon Perl" (trademark of AGFA).

Various membrane materials, alkaline solutions and electrochemical reactions are *per se* known and therefore do not need to be described in detail in the present application.

The configuration and assembly of the membrane in the electrode stack 6 is however not part of the prior art and has an advantageous configuration that shall be described in more detail herein.

The electrode unit 10 comprises a bipolar plate 12 coupled to an annular portion 14, and electrode plates 11 mounted on opposite sides of the bipolar plate 12. In a preferred embodiment, the bipolar plate and annular portion are integrally formed.

The electrode plate 11 may be mounted on the corresponding side of the bipolar plate 12 by various fixing means for example mechanical clamping means or by screws or rivets or by welding, for example by spot welding a flange portion 36 of the electrode plate to the corresponding side of the bipolar plate 12. In an embodiment, the electroplate 11 comprises said flange portion 36, a conical portion 38 extending from the flange portion, and a major portion 42 that is essentially planar and forms a circular disk providing a surface for the electrochemical reaction to occur. The conical portion 38 may advantageously be provided with orifices 40 that allow the alkaline solution to flow into the space between the major portion 42 and the bipolar plate 12 as well as allowing the alkaline to flow on the other side of the electrode plate 11 such that the electrochemical reaction may take place on both sides of the electrode plate 11. The orifices 40 also allow the gas produced on the side of the electrode plate 11 facing the bipolar plate 12 to exit through the top of the electrode plate 11 and into the gas circulation system 3 exiting the electrolyzer apparatus 5.

In an embodiment, the electrode plate may advantageously be a part stamped and formed from sheet metal, for instance from a steel alloy or other metals, plated with one or more materials, configured for producing a bipolar electrode in conjunction with the bipolar plate. The layer on the surface of the electrode plate may advantageously be configured to enhance the electrolytic reaction and to protect the plate from corrosion or erosion due to the presence of the electrolyte and the electrolysis reaction, for instance including a nickel plating. In particular, the plating material may comprise a catalyst material for enhancing the reaction on the electrode.

The bipolar plate may be made of various conductive materials. In a preferred embodiment the bipolar plate is made of a steel alloy, optionally plated with a Nickel layer configured to protect the plate from corrosion or erosion due to the presence of the electrolyte and the electrolysis reaction, and/or to enhance the electrolytic reaction. The bipolar plate may be forged, cast, and/or machined, whereby in a preferred embodiment the bipolar plate 12 and annular portion 14 are machined as a single part out of the same material stock.

The above described configuration of the electrode plate 11 which provides two surfaces for electrochemical reaction by being spaced from the bipolar plate 12 is particularly advantageous in providing a high efficiency and yield in gas production in a compact apparatus.

The annular portion of the electrode unit 10 forms an outer peripheral ring that is configured to provide sealing between the stacked units 10 configured to withstand the operating pressure of around 32 bars and the fluctuations around the nominal operating pressure, for instance up to 40 bars.

The annular portion 14 also provides means to fix the membrane 20 between the electrode units 10. On a first side of the annular portion 14 is provided a first side conical surface 44a and a membrane clamping section 48a comprising an inner radial surface 50a connected to a conical surface portion 52a via an acute angle corner 46. The second side of the annular portion 14 which is opposite the first side, is provided with a substantially complementary shape comprising a second side conical surface 44b and a membrane clamping section 48b comprising an outer radial surface portion 50b and conical surface portion 52b. The first and second side conical surfaces 44a, 44b are provided at a same angle and, when the electrode units are stacked one against each other the conical surfaces, act to center the units 10 one with respect to the other along the central longitudinal axis A of the electrolyzer apparatus 5.

A seal 22 with an annular conical shape may be positioned between the conical surfaces 44a, 44b serving to provide a hermetic seal between the stacked electrode units 10 at the outer periphery of the electrode units. The seal may for instance be made of a polymer or composite material, or of other dielectric materials configured to effect a sealing function between surfaces pressed together. The clamping force provided by the stack clamping mechanism 8 acting on the center locating portions 24a, 24b of the end plates 7a, 7b thus centers the electrode units and at the same time ensures the sealing force between the electrode units, whereby because of the centering effect and the conical surfaces the pressure around the seal 22 is homogeneously distributed. Also, in view of the spring 30 creating an elastic biasing force that provides an almost constant biasing force on the seal 22, effective sealing without damaging the seal by excessive pressure is also ensured. The single pressure point aligned along the longitudinal center axis A of the stack is particularly advantageous in allowing the electrode units to automatically center with respect to each other and to distribute evenly the sealing pressure force around the periphery of each electrode unit.

The complementary membrane clamping sections 48a, 48b capture a peripheral portion 21 of the membrane 20 between the radial surface portions 50a, 50b of the clamping sections, and the conical surface portions 52a, 52b ensure that the membrane is pinched and clamped by the stacked annular portions 14. The conical surface portions 52a, 52b also ensure that the membrane 20 is tensioned as the electrode units 10 are stacked together such that the membrane is flat and evenly tensioned, ensuring even spacing between the membrane 20 and electrode plates 11 of adjacent electrode units 10.

The center biasing element 26 of the clamping mechanism 8 in conjunction with the self centering conical surfaces of the annular portions 14 of adjacent electrode units 10 is particularly advantageous also for maintenance, or for reconfiguration the electrolyzer apparatus by adding or removing electrode units 10 to adjust to various power settings. This is because special bolt tightening operations to ensure the clamping together and the even distribution of clamping force around the periphery of the electrode units of the stack is not required in comparison to conventional electrode stacks that are clamped together by bolts that surround the periphery of the stack.

### List of references used

```
 Electrolyser system 1 for gas production
 →in particular for hydrogen gas production, and oxygen gas production
      gas storage containers 2a, 2b
            container for a first gas (e.g. H2) 2a
            container for a second gas (e.g. O2) 2b
      gas circulation system 3
            conduits for first gas 4a
            conduits for second gas 4b
      liquid feed system 9
      electrolyser apparatus 5
            electrode stack 6
                   electrode unit 10
                         electrode plate 11
                               flange portion 36
                               conical portion 38
                                      orifices 40
                               major portion 42
                         bipolar plate 12
                         annular portion 14
                               first side
                                      first side conical surface 44a
                                      membrane clamping section 48a
                                            inner radial surface portion 50a
                                            conical surface portion 52a
                                            corner 46
                               second side
                                      second side conical surface 44b
                                      membrane clamping section 48b
                                            outer radial surface portion 50b
                                            conical surface portion 52b
                   liquid inlet 16
                   gas outlet 18
                   membrane 20
                         membrane peripheral portion 21
                   seal 22
            end plates 7a, 7b
                   centre locating portion 24a, 24b
            stack fixing/clamping mechanism 8
                   centre biasing element 26
                         bolt 28
                         spring (plate/cup springs) 30
                   end supports 32a, 32b
                         nut 34
```

## Claims

1. Electrolyzer apparatus (5) comprising a plurality of electrode units (10) mounted in a juxtaposed stacked manner along a center longitudinal axis (A) to form an electrode stack (6), the electrode units (10) of the stack being separated by a membrane (20) configured for the transfer of ions between electrode units, each electrode unit comprising a liquid inlet (16) configured for inflow of an alkaline electrolyte, and gas outlets (18) for gas produced by an electrochemical reaction on the electrolytic liquid, the electrode units comprising a bipolar plate (12) supported by an annular portion (14), **characterized in that** the electrode unit comprises at least one electrode plate (11) mounted on at least one side of the bipolar plate (12), the electrode plate (11) comprising a major portion (42) spaced from the bipolar plate, the electrode plate further comprising orifices (40) allowing the electrolyte liquid to flow on opposite sides of the major portion (42) such that an electrochemical reaction may occur on both sides of the electrode plate.

2. Electrolyzer apparatus according to the preceding claim, wherein the electrode stack is clamped between end plates (7a, 7b) and a stack clamping mechanism (8) comprising a center biasing element (26) configured to apply pressure between the end plates (7a, 7b).

3. Electrolyzer apparatus (5) comprising a plurality of electrode units (10) mounted in a juxtaposed stacked manner along a longitudinal axis (A) to form an electrode stack (6), the electrode units (10) of the stack being separated by a membrane (20) configured for transfer of ions between electrode units, each electrode unit comprising a liquid inlet (16) configured for inflow of an alkaline electrolyte, and gas outlets (18) for gas produced by an electrochemical reaction on the electrolytic liquid, the electrode units comprising a bipolar plate (12) supported by an annular portion (14), **characterized in that** the electrode stack is clamped between end plates (7a, 7b) and a stack clamping mechanism (8) comprising a center biasing element (26) configured to apply pressure between the end plates (7a, 7b) aligned with the center longitudinal axis (A) of the electrode stack.

4. Electrolyzer apparatus according to the preceding claim, wherein the electrode unit comprises at least one electrode plate (11) mounted on at least one side of the bipolar plate (12), the electrode plate (11) comprising a major portion (42) spaced from the bipolar plate, the electrode plate further comprising orifices (40) allowing the electrolyte liquid to flow on opposite sides of the major portion (42) such that an electrochemical reaction may occur on both sides of the electrode plate.

5. Electrolyzer apparatus according to claim 1 or 4, wherein the electrode unit comprises a first electrode plate (11) on one side of the bipolar plate and a second electrode plate (11) on an opposite second side of the bipolar plate (12).

6. Electrolyzer apparatus according to the preceding claim, wherein the liquid inlet (16) of the electrode unit (10) comprises a bore through the annular portion (14) and into a portion of the bipolar plate (12) such that the inlet accesses both sides of the bipolar plate (12).

7. Electrolyzer apparatus according to any one of claims 1, 4, 5 or 6 wherein the electrode plate (11) comprises a flange portion (36) at a periphery of the electrode plate configured for fixing the electrode plate to the bipolar plate (12), and a radial or conical portion (38) connecting the flange portion to the major portion (42) configured to space the major portion at a non-zero certain distance from the surface of the bipolar plate (12).

8. Electrolyzer apparatus according to the preceding claim, wherein the orifices (40) are provided in the conical or radial portion of the electrode plate.

9. Electrolyzer apparatus according to any one of claims 1 or 4-8, wherein the electrode plate may advantageously be a part stamped and formed from sheet metal.

10. Electrolyzer apparatus according to any one of the preceding claims, wherein the annular portion (14) of the electrode unit (10) comprises a first side having a first side conical surface (44a) and a second side having a second side conical surface (44b) substantially complementary to the first side conical surface such that the conical surfaces effect a centering of the stacked electrode units one with respect to the other along the longitudinal axis (A) of the apparatus.

11. Electrolyzer apparatus according to the preceding claim, wherein an annular conical seal (22) is positioned between the first side conical surface (44a) and second side conical surface (44b) of adjacent stacked electrode units (10).

12. Electrolyzer apparatus according to any one of the preceding claims, wherein the annular portion (14) comprises a first side with a membrane clamping section (48a) having an inner radial surface portion (50a), joined to a conical surface portion (52a) via an acute angle corner (46), and a second side comprising a membrane clamping section (48b) complementary to the membrane clamping section (44a) of the first side, the second side membrane clamping section (44b) comprising an outer radial surface portion (50b) and an conical surface portion (52b) connected together via an acute angle protruding corner, a membrane peripheral portion (21) of the membrane (20) being clamped between the membrane clamping sections (48a, 48b) of adjacent stacked electrode units (10).

13. Electrolyzer apparatus according to claim 2 or 3, wherein the center biasing element (26) comprises a spring (30) and a pressure generating mechanism, such as a bolt (28) and nut (34), for pressing the spring against a center locating portion (24a) of at least one of the end plates (7a).

14. Electrolyzer apparatus according to the preceding claim, wherein the spring is in the form of a stack of plurality of plate or cups springs.

15. Electrolyzer system for gas production, in particular for splitting water into hydrogen gas and oxygen gas, comprising: an electrolyzer according to any one of the preceding claims; gas storage containers (2a, 2b) comprising a container for a first gas and a container for a second gas; a gas circulation system (3) interconnecting the electrolyzer to the gas storage containers; and a liquid supply and feed system (6) for feeding an electrolyte liquid into the electrolyzer.
